(19) Europäisches Patentamt
European Patent Office
Office européen des brevets

(11) EP 2 909 477 B1

(12) FASCICULE DE BREVET EUROPEEN

(45) Date de publication et mention
de la délivrance du brevet:
**26.08.2020 Bulletin 2020/35**

(21) Numéro de dépôt: **13785551.6**

(22) Date de dépôt: **14.10.2013**

(51) Int Cl.:
*F03G 7/00* *(2006.01)*          *B01D 61/02* *(2006.01)*
*B01D 61/06* *(2006.01)*        *B01D 61/42* *(2006.01)*
*H01M 8/22* *(2006.01)*

(86) Numéro de dépôt international:
**PCT/FR2013/052442**

(87) Numéro de publication internationale:
**WO 2014/060690 (24.04.2014 Gazette 2014/17)**

(54) **PROCEDE ET DISPOSITIF DE PRODUCTION D'ENERGIE**

VERFAHREN UND VORRICHTUNG ZUR ENERGIEPRODUKTION

METHOD AND DEVICE FOR PRODUCING ENERGY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2012 FR 1259847**

(43) Date de publication de la demande:
**26.08.2015 Bulletin 2015/35**

(73) Titulaire: **Sweetch Energy
56100 Lorient (FR)**

(72) Inventeurs:
• **BOCQUET, Lyderic**
  **F-69003 Lyon (FR)**
• **BIANCE, Anne-laure**
  **F-69003 Lyon (FR)**
• **PONCHARAL, Philippe**
  **F-69380 Chazay D'azergues (FR)**
• **SIRIA, Alessandro**
  **F-69003 Lyon (FR)**

(74) Mandataire: **Cabinet Beau de Loménie
51 avenue Jean Jaurès
BP 7073
69301 Lyon Cedex 07 (FR)**

(56) Documents cités:
EP-A1- 1 746 680          WO-A1-2008/108633
WO-A1-2010/120327        WO-A1-2012/047359
WO-A2-2007/025104        WO-A2-2009/129354
US-A- 4 283 913          US-A1- 2009 321 355
US-A1- 2011 186 506      US-A1- 2012 080 381

EP 2 909 477 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne le domaine technique de la production d'énergie. Plus précisément, la présente invention concerne un procédé et un dispositif de production d'énergie électrique, à partir d'un gradient de concentration mettant en œuvre une membrane particulière.

Différents travaux ont étudié différentes approches tentant d'exploiter les phénomènes d'osmose et d'électrodialyse pour tenter de récupérer l'énergie générée par des gradients de concentration ou des gradients salins. Pour cela, deux solutions de concentrations différentes en un sel ou soluté sont disposées de part et d'autre d'une membrane. Le gradient de concentration entraîne la diffusion de l'une des solutions à travers la membrane, ce qui peut conduire à de la création d'énergie. On peut notamment se référer aux travaux J. C. Fair et al., The Journal of Chemical Physics, 54(8), 3307-3316, 1971, Jan W. Post et al., Environ Sci. Technol. 2008, 42, 5785-5790, 2008 et Bruce E. Logan et al., Nature, 488, 313-319, 2012) qui ont étudié l'électrodialyse inverse (RED). Des membranes de type polymérique, notamment de polyamide ou de cellulose-acétate ont été utilisées pour ce type d'applications. Il a également été envisagé d'utiliser des membranes comportant des canaux dont la surface est de nature inorganique, ce qui, lorsque ces derniers sont remplis avec une solution aqueuse, entraîne une ionisation de surface, une adsorption d'ions et une dissolution d'ions (Dong-Kwon Kim et al., Microfluid nanofluid, 9, 1215-1224, 2010). Malheureusement, la production d'énergie avec les dispositifs proposés restent jusqu'à aujourd'hui limitée à quelques Watts par mètre carré de membrane, ce qui n'est pas exploitable concrètement. Par exemple, l'utilisation de membrane en silice présentant des nanocanaux n'a pas permis d'obtenir des résultats supérieurs à ce qui était obtenu avec des membranes polymériques (Dong-Kwon Kim et al., Microfluid nanofluid, 9, 1215-1224, 2010).

On peut également citer les documents suivants :

- EP 1746 680 qui concerne une usine de dessalement comprenant une amenée d'eau de mer, un module de dessalement doté d'un module de dessalement thermique ou d'osmose inverse, une sortie d'eau fraîche et une sortie de saumure ; cette usine est caractérisée en ce qu'elle comprend un bloc d'alimentation de gradient de salinité pourvu d'une entrée de saumure, d'une entrée d'eau de mer et d'une sortie d'eau mélangée ; ladite sortie de saumure est reliée à ladite entrée de saumure et ledit bloc d'alimentation de gradient de salinité est disposé pour engendrer un courant électrique, un chauffe-eau solaire étant compris entre la sortie et l'entrée de saumure ;

- le brevet US 4,283,913A qui décrit un bassin solaire saturé non-convectif, utilisé avec de l'électrodialyse inverse ou de l'osmose à pression retardée pour de la production d'énergie ;
- la demande WO 2008/108633 qui concerne un procédé de génération d'une énergie électrique utilisant un dispositif pour effectuer un procédé d'électrodialyse inverse ; le dispositif est caractérisé par le fait qu'il comprend des moyens pour limiter le transport d'ions multivalents à partir des solutions électrolytiques faiblement osmotiques jusqu'aux solutions électrolytiques hautement osmotiques élevées.

Dans ce contexte, la présente invention se propose de fournir un nouveau dispositif et un nouveau procédé adaptés à la production d'énergie électrique qui soient non polluants, faciles à mettre en œuvre, relativement économiques et qui offrent de nombreuses possibilités de production d'énergie renouvelable.

Un autre des objectifs de la présente invention est de fournir un procédé et un dispositif qui pourraient être plus performants, en termes de densité d'énergie créée notamment.

Ainsi, la présente invention a pour objet un dispositif pour la production d'énergie électrique comprenant deux cellules destinées à contenir deux solutions de concentration différente en au moins un soluté et séparées par au moins une membrane de séparation dans laquelle sont aménagés des canaux, chacune des cellules étant équipée d'une électrode destinée à être en contact avec la solution que contiendra ladite cellule, caractérisé en ce que les parois internes des canaux sont constituées d'un matériau choisi parmi le nitrure de bore, le carbone dopé avec du bore, le nitrure de bore dopé avec du carbone, ou tout autre mélange des éléments bore, carbone et azote. Dans le cadre de l'invention, le nitrure de bore est le matériau préféré pour constituer les parois des canaux de passage pour la solution.

L'invention a également pour objet un procédé de production d'énergie électrique utilisant un dispositif selon l'invention, dans lequel une première solution est placée dans l'une des cellules, de manière à ce que l'électrode dont elle est équipée soit en contact avec cette première solution, et une deuxième solution présentant une concentration en au moins un soluté différente de celle de la première solution est placée dans l'autre cellule, de manière à ce que l'électrode dont elle est équipée soit en contact avec cette deuxième solution et dans lequel l'énergie électrique produite entre les deux électrodes est récupérée.

Les dispositifs et procédés selon l'invention vont être exposés de manière plus détaillée dans la description qui va suivre en référence aux **Figures 1** à **3** annexées qui illustrent des exemples de dispositif selon l'invention.

Les **Figures 1** et **3** sont des vues schématiques en coupe de dispositifs selon l'invention

La **Figure 2** est une vue schématique partielle en coupe d'une membrane pouvant être utilisée.

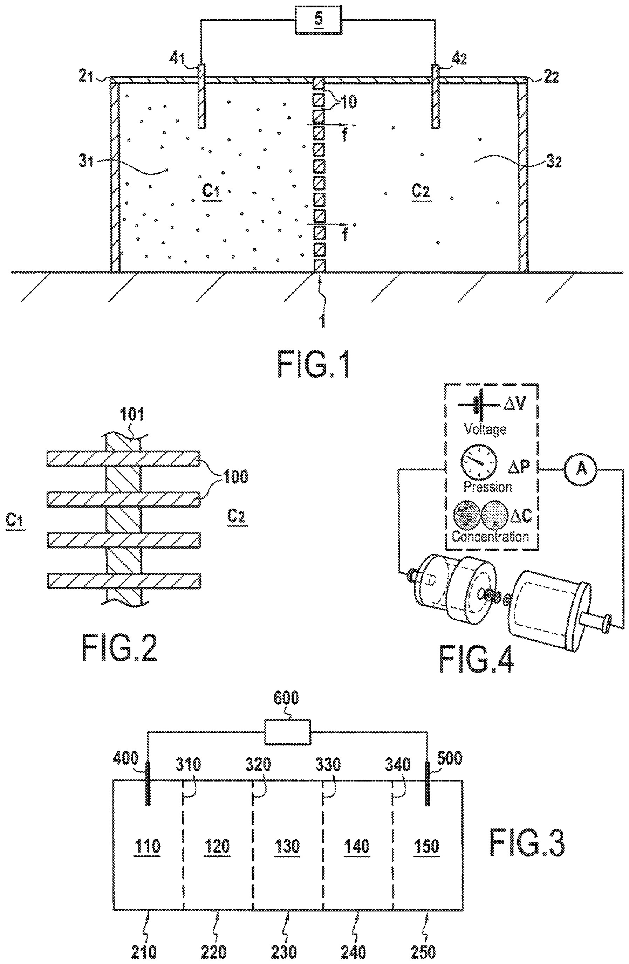

La **Figure 1** présente schématiquement un exemple de dispositif selon l'invention comprenant deux cellules $2_1$ et $2_2$ séparées par une membrane **1**. Chaque cellule contient une solution $3_1$ et $3_2$ dans laquelle trempe une électrode $4_1$ et $4_2$. Dans l'exemple illustré, les électrodes sont partiellement immergées dans les solutions, mais il pourrait aussi bien être prévu que les électrodes se présentent sous la forme de plaque positionnée contre, ou constituant au moins en partie une paroi de cellule. Dans le cadre de l'invention, la membrane **1** séparant les deux cellules $2_1$ et $2_2$, constitue une paroi de séparation entre les deux solutions $3_1$ et $3_2$, placée entre les deux cellules $2_1$ et $2_2$, mais des passages **10** y sont aménagés pour permettre la diffusion d'une solution d'une cellule à l'autre. En effet, la différence de concentration en au moins un des solutés dissouts dans au moins l'une des solutions provoque une différence de pression osmotique qui engendre un déplacement d'une des solutions à travers la membrane. Dans l'exemple illustré, la solution $3_1$ présente une concentration $C_1$ en un soluté supérieure à la concentration $C_2$ du même soluté dans la solution $3_2$. Il se crée ainsi un flux **f** de solution de la cellule $2_1$ vers la cellule $2_2$. Cette différence de concentration crée une énergie électrique, notamment sous la forme d'un courant, généré par osmose à travers les canaux de diffusion, Le phénomène utilisé est connu sous le nom d'électrodialyse inverse (J. C. Fair *et al.,* 1971 *supra,* Jan W. Post *et al.,* 2008 *supra* et Bruce E. Logan *et al.,* 2012 *supra*).

Du fait du choix du matériau constituant les parois des canaux de passage pour la solution, lorsque ces derniers sont remplis de solution, et en particulier d'une solution aqueuse, des charges sont créées sur les parois des canaux qui vont être entraînées avec la solution, permettant ainsi la génération d'une énergie électrique particulièrement élevée entre les deux électrodes. Il était totalement imprévisible que le choix de canaux délimités par des parois constituées d'un matériau choisi parmi le nitrure de bore, le carbone dopé avec du bore, le nitrure de bore dopé avec du carbone, ou tout autre mélange des éléments bore, carbone et azote, permettrait d'obtenir un tel effet qui est bien supérieur à ce qui était décrit dans la littérature, par exemple, avec des membranes polymériques ou des membranes incorporant des canaux aménagés dans une membrane en silice (Dong-Kwon Kim *et al.,* 2010, *supra*). En effet, la réactivité chimique du BN, notamment, est plutôt connue pour être faible ou inexistante. Ce type de matériau était donc attendu comme inerte chimiquement (R. Arenal, X. Blase, A. Loiseau, Advances in Physics, 59, 101-179 (2010).).

Les canaux peuvent être aménagés sous la forme de trous dans une paroi formée de l'un des matériaux sélectionnés, comme, par exemple, illustré sur la **Figure 1.** Il peut également être prévu que les canaux soient aménagés sous la forme de trous dans une paroi formée en un autre matériau et que les parois des trous soient recouvertes par le matériau sélectionné, selon toute technique appropriée. Néanmoins, pour des raisons de faisabilité et de coût, on préférera que les canaux soient formés par des tubes du matériau sélectionné de taille appropriée. De manière préférée, ces tubes seront positionnés parallèlement les uns aux autres comme illustré **Figure 2.** Ces tubes pourront être insérés dans une paroi ou plaque préalablement percée et l'étanchéité autour du tube pourra être réalisée par l'homme du métier par tout moyen approprié. La **Figure 2** présente schématiquement une telle membrane dans laquelle une série de tubes **100** est insérée dans les trous d'une plaque **101**. Une telle plaque pourra, par exemple, être constituée en un matériau tel que la silice, le nitrure de silicium, l'aluminate, le carbone, le naphtalène ou tout autre matériau amorphe étanche au soluté. De telles membranes incorporant des nanotubes de nitrure de bore sont notamment décrites dans J. Phys. Chem. C. 2007, 111, 13378-13384 et pourront être utilisées dans le cadre de l'invention. Pour la préparation des autres types de nanotubes pouvant être intégrés dans une membrane, on pourra se référer à Holt et al. Science 2006, 312, p1034. D'une manière générale, que ce soit sous la forme de dépôt ou de nanotube, le nitrure de bore, le carbone dopé avec du bore, le nitrure de bore dopé avec du carbone ou tout autre mélange des éléments bore, carbone et azote pourra être obtenu par exemple, par un procédé de dépôt chimique en phase vapeur CVD (pour « Chemical Vapor Déposition », e.g. R.D. Gretz et al., Surface Science. 1967, 6 p 171), notamment assisté par plasma, l'échantillon pouvant être directement exposé au plasma PECVD (pour « Plasma-Enhanced CVD », e.g. L. Bardos et al., Journal Of Physics D - Applied Physics, 1982, 15 L79-L82), ou éloigné du plasma RPECVD (pour« Remote plasma-enhanced CVD », e.g. D.V. Tsu and G. Lucovsky, Journal Of Non-Crystalline Solids 1987, 97-8, p839-842), par la technique de dépôt chimique en phase vapeur assistée par filament chaud HWCVD (pour « Hot Wire CVD », e.g. S.C. Saha et al. Thin Solid Films 1999, 337, p248-252), par la technique de dépôt chimique en phase vapeur assisté par photon UV UVCVD (pour « UV(Hg) photon assisted Chemical Vapor Déposition », e.g. M. Petitjean et al, Applied Physics A - Materials Science & Processing, 1992, 54, p95-99), par la technique de dépôt chimique en phase vapeur à pression atmosphérique APCVD (pour « Atmospheric Chemical Vapor Déposition » e.g. B. Mayer, Thin Solid Films 1992, 221 p166-182), par la technique de dépôt chimique en phase vapeur à basse pression LPCVD (pour « Low Pressure Chemical Vapor Déposition » e.g. K. Gruter et al. Journal Of Crystal Growth 1989 94 p607-612) ou plus généralement, par toute technique dérivée de la CVD. Pour le procédé de fabrication du nitrure de bore, on pourra utiliser comme mélange gazeux par exemple de l'ammoniaque bullé dans de la borazine liquide (T. Wideman et al., Inorganic Chemistry 1995, 34, 1002). Pour le procédé de fabrication du carbone, on pourra utiliser des hydrocarbones simples, par exemple de l'acéthylène ou du méthane. Pour la fabrication de matériaux composés d'un mélange de nitrure de bore et de carbone, on pourra utiliser un mélange des gaz précités.

Excepté au niveau des canaux, le reste de la membrane sera, de préférence, imperméable aux solutions, de manière à canaliser la diffusion de l'une ou l'autre des solutions en fonction du gradient de concentration, à la surface des canaux dont les parois sont formées du matériau sélectionné.

Les parois des canaux ou les tubes utilisés pourront être constitués d'un matériau choisi parmi le nitrure de bore, le carbone dopé avec du bore, le nitrure de bore dopé avec du carbone, ou tout autre mélange des éléments bore, carbone et azote, de préférence, sous une forme cristalline, de structure hexagonale, et, de préférence, de nitrure de bore hexagonal. On dit qu'un matériau est dopé avec un autre élément, lorsqu'il contient au minimum 1 atome de l'élément correspondant au dopage et jusqu'à 50% d'atomes de l'élément correspondant au dopage par rapport au nombre d'atomes total du matériau, et de préférence jusqu'à 10%.

Par ailleurs, une forme cristalline, de structure hexagonale est caractérisée par la présence sur son spectre de diffraction des rayons X aux petits angles par des pics dont la distance interplan correspond aux indices de Miller (1,0,0), (1,1,0), (2,0,0). Un tel spectre peut être obtenu sur une poudre du matériau avec une radiation $CuK\alpha$ ($\lambda$ = 0.154 nm) sur une gamme d'angle $2\Theta$ angle dans la gamme [0,5° - 10,0°], par exemple avec 0,1 °/min.

De manière avantageuse, le diamètre des canaux appartient à la gamme allant de 1 à 1000 nm, et de préférence à la gamme allant de 10 à 100 nm. Dans le cas où des nanotubes sont utilisés, ce diamètre correspond au diamètre interne des tubes. De manière avantageuse, la population de canaux présents sur la membrane présente des diamètres assez homogènes, par exemple, avec une variabilité de moins de 100% mesurée entre les deux valeurs les plus éloignées, de préférence de moins de 10%. Les canaux présenteront, par exemple, une longueur de 100 à 1000000 nm, et de préférence de 1000 à 10000 nm. Le diamètre et la longueur des canaux peuvent être mesurés par microscopie électronique à transmission.

De manière avantageuse, la surface de la membrane doit être maximisée, et pourra varier, par exemple, entre 10 $\mu m^2$ et 10 $m^2$. La fraction surfacique représentée par les canaux sera, de préférence, comprise entre 1% et 91%. La température de mise en œuvre du procédé sera, de préférence, égale à la température ambiante (c'est-à-dire comprise entre 18 et 25°C), mais pourra plus généralement varier de 0 à 100°C. Initialement, les solutions utilisées seront, de préférence, à pression atmosphérique, bien qu'une pression par exemple de -100 à 100 bars puisse être envisagée. La pression appliquée sur chacune des solutions placée au départ, de part et d'autre, d'une membrane, sera identique et se modifiera lentement au cours du temps créant une différence de pression entre les deux solutions situées, de part et d'autre d'une membrane, du fait de la diffusion créée par le gradient de concentration. Les températures et pressions d'utilisation seront, bien entendu, limitées par la tenue de la membrane utilisée.

Le soluté, dont la concentration varie d'une solution à l'autre, peut se trouver ou non sous la forme d'un sel. A titre d'exemple, on peut citer des solutés de petite taille, tels que des sels de métaux alcalins, et notamment NaCl ou KCl, ou des sucres. Bien que ce ne soit pas obligatoire, le soluté à l'origine du gradient de concentration exploité dans le cadre de l'invention sera de taille telle à pouvoir passer par les canaux. Les solutions utilisées peuvent être des solutions organiques, par exemple, l'acide oléique, les alcools et leurs dérivés, ou de préférence des solutions aqueuses qui favorisent la création de charges à la surface des canaux. Bien entendu, les solutions les plus simples et les moins coûteuses seront préférées, de sorte que les solutions utilisées pourront être de l'eau de mer ou de l'eau de rivière des eaux usées ou des rejets industriels. A titre d'exemple, les solutions placées initialement, de part et d'autre, de la membrane présenteront une différence de concentration en au moins un soluté, correspondant à un rapport de concentrations entre les deux solutions de 1 à 100 000 et de préférence de 10 à 10 000.

Il est possible que le dispositif selon l'invention comporte toute une série de cellules séparées par des membranes précédemment décrites comme illustré Figure 3. Le dispositif présenté **Figure 3** comporte cinq cellules **210** à **250** comportant respectivement des solutions **110** à **150** séparées par des membranes **310** à **340**. Les solutions **110** à **150** seront caractérisées par un gradient de concentration en au moins un soluté. Par exemple, la solution **110** présente une concentration en un soluté donné inférieure à la solution **120** contenue dans la cellule **220** adjacente, cette concentration étant elle-même inférieure à la concentration de ce soluté dans la solution **130** contenue dans la cellule **230** adjacente, cette concentration étant elle-même inférieure à la concentration de ce soluté dans la solution **140** contenue dans la cellule **240** adjacente, et cette concentration étant elle-même inférieure à la concentration de ce soluté dans la solution **150** contenue dans la cellule **250** adjacente. Au lieu d'un gradient décroissant de la cellule **210** à **250**, un gradient croissant pourrait tout aussi bien être prévu. Dans le cas de l'exemple illustré **Figure 3**, les deux électrodes **400** et **500** seront placées dans la première solution **110** et la dernière solution **150**, de manière à récupérer le maximum d'énergie. D'autres combinaisons entre les concentrations en soluté des compartiments et le placement des électrodes dans les compartiments peuvent être envisagées. Par exemple, il n'est pas indispensable de prévoir un gradient de concentration continu entre la première et la dernière solution, l'essentiel étant qu'un gradient existe entre deux solutions séparées par une membrane, le courant pouvant être récupéré à chaque fois entre deux électrodes placées entre deux cellules successives.

Le procédé et le dispositif selon l'invention permettent de générer une énergie électrique entre les deux électrodes. Les électrodes peuvent être en tout métal approprié. Par exemple, des électrodes d'argent ou de chlorure d'argent peuvent être utilisées. Le dispositif selon l'invention incorporera tout dispositif approprié permettant de récupérer l'énergie électrique générée. Un tel dispositif relié aux deux électrodes est symbolisé sous les références **5** et **600** sur les **Figures 1** et 3. L'énergie électrique est générée grâce à la diffusion de l'une ou l'autre des solutions due au gradient de concentration existant initialement entre les deux solutions. Une production en continue d'énergie électrique peut être envisagée par renouvellement de l'une au moins des deux solutions, voire des deux solutions, par exemple en introduisant un flux d'entrée et de sortie dans ces compartiments. Ce renouvellement peut être fait en continu ou de manière séquencée et, de préférence, régulièrement.

L'énergie obtenue est supérieure à celle obtenue dans les mêmes conditions avec les dispositifs décrits dans la littérature. Lorsque le pH d'au moins l'une des deux solutions, voire des deux solutions, est supérieur ou égal à 6, de préférence supérieur ou égal à 7, préférentiellement supérieur ou égal à 8, et encore préférentiellement supérieur ou égal à 10, la quantité d'énergie électrique générée est encore plus importante.

Il a également été mis en évidence que l'effet bénéfique obtenu avec de telles valeurs de pH pouvait être conservé pendant un certain temps, par exemple, pendant 1 à 7 jours, même si par la suite les solutions placées de part et d'autre de la membrane pour générer de l'énergie présentaient un pH inférieur à ces valeurs. Aussi, selon un mode de réalisation particulier, le procédé selon l'invention comporte une étape de préparation du dispositif réalisée avec deux solutions de concentration différente en au moins un soluté, l'une au moins des deux solutions, voire les deux solutions, présentant un pH supérieur ou égal à 6, de préférence supérieur ou égal à 7, préférentiellement supérieur ou égal à 8, et encore préférentiellement supérieur ou égal à 10. De préférence, ces deux solutions sont disposées dans le dispositif de part et d'autre de la membrane pendant une durée de 2 à 10 mn, par exemple, et ensuite, elles peuvent être remplacées par des solutions de pH plus faible.

La présente invention présente un intérêt tout particulier dans la création d'énergie électrique. A titre illustratif, il est, notamment, possible de générer dans le cadre de l'invention, des énergies correspondant à des valeurs de puissance de 100 à 1000 Watts par mètre carré de membrane. Le procédé et le dispositif mis en œuvre sont particulièrement simples et peu couteux et ouvrent de nouvelles voies dans la problématique actuelle des énergies renouvelables. Le dispositif et le procédé selon l'invention pourront notamment être utilisés pour réaliser des micro-batteries ou des micro-générateurs d'énergie.

Les exemples ci-après en référence aux **Figures 4** à **7** permettent de valider le procédé et le dispositif selon l'invention.

**Figure 4 :** illustration schématique du dispositif utilisé dans les différents essais.

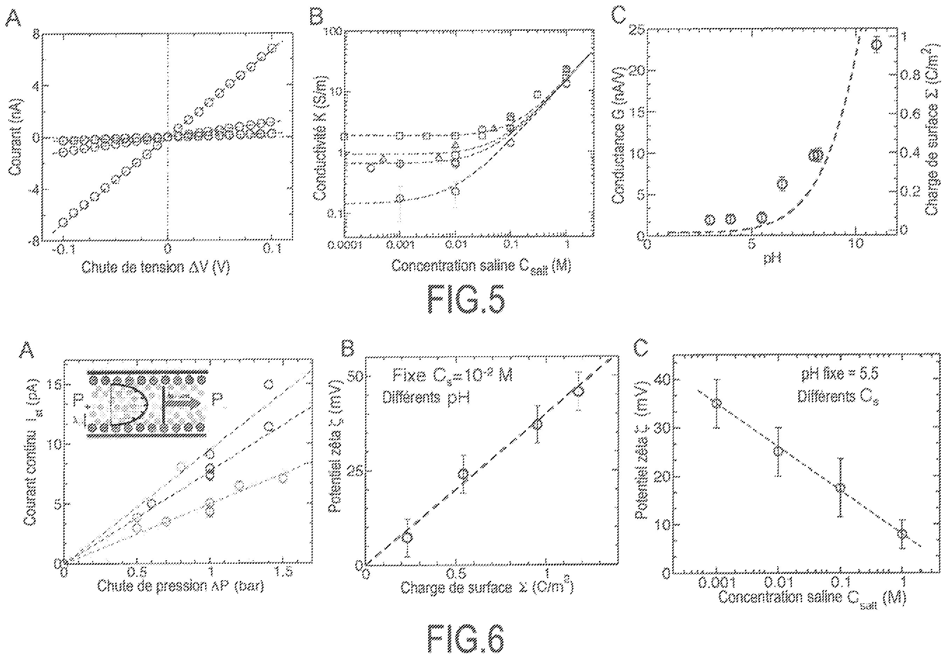

**Figure 5** : conductance électrique et réactivité chimique du BNNT - **A.** Courant ionique/chute de tension pour $C_{salt}$ = 1M (bleu), $10^{-1}$M (violet), $10^{-1}$M (orange), $10^{-3}$M (rouge) à un pH de 5 ; t-BNNT avec {R,L} = {29, 900} nm. Les lignes en pointillés correspondent aux ajustements linéaires, à partir desquels la conductance $G = I/\Delta V$ et la conductiivité $K = G \times L/\pi R^2$ sont extraites. **B.** Conductivité $K$/concentration saline pour différents t-BNNT, avec {R,L} = {40, 1250}, {29, 900}, {22, 1500}, {15, 800} (de bas en haut), à un pH de 5. Les lignes en pointillés correspondent aux prédictions en utilisant l'équation (1), avec $\Sigma$ = 25, 85, 90, 125 mC/m². **C.** Dépendance de la conductance (axe de gauche) au pH pour un $C_{salt}$ fixe de $10^{-2}$M ; t-BNNT avec {R,L} = {29, 900} nm. La charge de surface (axe de droite) déduite de l'équation (1) augmente jusqu'à des valeurs de $\approx$ 1C.m$^{-2}$. La ligne en pointillés correspond à la prédiction du modèle de régulation de charge, avec $pK_a \approx 5,5$.

**Figure 6 :** courant continu entraîné par la pression. **A.** Courant continu induit par une chute de pression : t-BNNT avec {R,L} = {29, 900} nm, pour un pH de 7, 8,5 et 10 (de bas en haut) et un $C_{salt}$ fixe de $10^{-2}$M. Début : échantillon du courant continu entraîné par la pression. **B.** Potentiel zêta extrait/charge de surface pour un $C_{salt}$ fixe de $10^{-2}$M, et un pH de 5 à 11,5. La charge de surface mesurée est extraite de l'équation (1) pour chaque pH. **C.** Potentiel zêta mesuré/concentration saline, pour un pH de 5,5, pour un t-BNNT ayant un {R,L} = {40, 1250} nm.

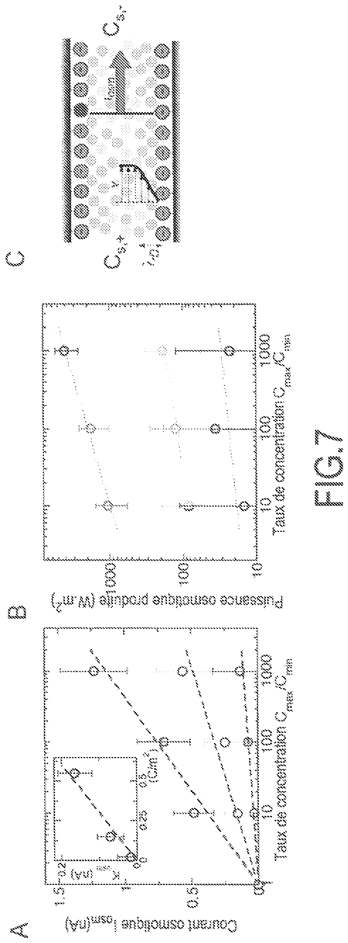

**Figure 7** : génération d'énergie osmotique avec des gradients de salinité. **A.** Courant continu osmotique/différence de concentration, pour un t-BNNT avec {R,L} = {40, 1250} nm, pour un pH de 5,5, 9,5 et 11 (de bas en haut). Les points expérimentaux regroupent des mesures avec différents ensembles de concentrations salines dans les deux réservoirs, pour un $C_{salt}$ de $10^{-3}$ à 1M. Les barres d'erreur proviennent de l'analyse d'erreur correspondante. Les lignes en pointillés correspondent aux ajustements linéaires $I_{osm} = K_{osm} \times \log[C_{max}/C_{min}]$ *Insert*: mobilité osmotique/charge de surface. La charge de surface est mesurée à partir de mesures de la conductance indépendantes. La ligne en pointillés correspond à un ajustement linéaire $K_{osm} \approx 0.33 \times \Sigma$. **B.** Densité de puissance correspondante (par unité de surface du BNNT) pour les trois pH. Les lignes en pointillés servent de guide visuel. Sur ce graphique, la concentration minimale est fixée à $C_{min} = 10^{-3}$ M. **C.** Echantillon du courant continu osmotique.

## 1. Mesures électriques

Les mesures électriques sont effectuées à l'aide de deux électrodes Ag/AgCl intégrées aux réservoirs en PEEK. Le dispositif expérimental est placé dans une cage de Faraday. Les électrodes sont des fils en argent de 0,8 mm de diamètre initialement activés en les plongeant dans du NaClO pendant 30 minutes. Les électrodes sont ensuite reliées à un convertisseur I/V (filtre passe-bas - 1 KHz) en série, à une carte d'acquisition (*National Instrument*), et contrôlées par un logiciel. La tension est également réglée via la carte d'acquisition (mode de sortie) et le logiciel. La résolution avec ce dispositif est de $\pm$ 1 pA.

**2. Préparation des solutions de KCl utilisées**

Des solutions de KCl à différentes concentrations, entre $10^{-4}$ M et 1M, sont obtenues en dissolvant du KCl (*Roth*) dans de l'eau déminéralisée. Le pH est ajusté à l'aide de solutions de HCl (*Acros*) et de KOH (*Roth*). La conductivité et le pH de la solution sont vérifiés à l'aide d'un conductimètre (*Hanna Instruments*) et d'un pH-mètre (*Labomoderne*) juste avant les expériences, et sont revérifiés ensuite. Aucune différence notable n'a été observée. Juste avant d'introduire le liquide dans le réservoir, un dégazage est effectué dans un dessiccateur relié à une pompe pendant 20 minutes d'ébullition.

3. **Mesure de Conductance**

La conductance est mesurée à l'aide de la pente des courbes I/V. La tension est variée entre -1 et 1 V, mais les mesures de conductance résultent de l'ajustement linéaire courant/tension entre -0,1 V et 0,1 V. Pour un système à faible conductance, une relaxation capacitive sur une échelle de temps de 100 secondes est observée. La mesure du courant est ainsi obtenue après une attente de 200 s à chaque tension, afin d'éviter cet effet capacitif. Pour les concentrations plus élevées, une attente de 10 secondes suffit.

Afin de garantir que la mesure correspond bien au transport des ions à l'intérieur du tube, des expériences de référence ont été effectuées. Tout d'abord, des mesures de conductance d'une membrane sans trou et d'un tube bouché ont été réalisées. Une conductance résiduelle de 0,1 nS est observée dans les deux cas, et est inférieure à la conductance la plus basse mesurée pour le tube. De plus, dans le cadre de ces expériences de référence, cette conductance résiduelle ne dépend pas de la concentration en sel. La valeur limite inférieure pour les mesures de conductance est ainsi de 0,1 nS. Une différence claire est observée avec un tube ouvert, avec lequel une dépendance à la concentration en sel est clairement observée pour les concentrations salines supérieures à $10^{-2}$ M. Une autre preuve du transport fluidique à l'intérieur du tube est fournie par une imagerie MET après les mesures fluidiques. Les images montrent clairement que le tube est rempli de sel.

**4. Essais réalisés**

Les propriétés de transport d'un fluide à l'intérieur d'un seul tube de nitrure de bore de diamètre interne de taille nanométrique ont été étudiées, dans une perspective de création d'énergie renouvelable. Le dispositif nano-fluidique utilisé est composé d'un seul nanotube de nitrure de bore disposé au sein d'une membrane solide imperméable qui relie deux réservoirs **(Figure 4)**. Le transport de fluide dans le nanotube de nitrure de bore transmembranaire (noté t-BNNT) a été étudié sous des contraintes électriques, des contraintes de pression, et des contraintes chimiques, et des combinaisons de celles-ci. Le dispositif t-BNNT se compose d'un seul nanotube de nitrure de bore inséré dans un orifice aménagé dans une membrane en nitrure de silicium (SiN). Un seul orifice, ayant un diamètre de 100 à 200 nm, a été percé dans la membrane à l'aide d'un faisceau d'ions focalisé (FIB). Un BNNT à multiples parois a été collé à l'extrémité d'une pointe de tungstène gravée électrochimiquement, et son apex a été ouvert par des procédés de désorption ionique par champ électrique. L'insertion du nanotube dans l'orifice a été réalisée *in situ* à l'aide d'une nano-manipulation par microscope électronique à balayage (SEM), avec une résolution nanométrique, Dès que le tube a été introduit, l'orifice a été fermé autour des parois externes du tube grâce à un dépôt local de naphtalène induit par faisceau d'électrons (EBID). L'extrémité a ensuite été rétractée, provoquant ainsi un coulissement télescopique des parois internes du nanotube. Cette étape permet de garantir que le nanotube a ses deux extrémités bien ouvertes, et ainsi d'empêcher tout défaut intérieur dans le canal. Une inspection finale à l'aide d'un microscope électronique à transmission (MET) a permis de vérifier et de mesurer la qualité et le diamètre intérieur du nanotube. Des tubes ayant un rayon intérieur $R \approx$ 15 à 40 nm et des longueurs L $\approx$ 1 $\mu$m ont été étudiés.

La membrane traversée par le tube de nitrure de bore a ensuite été placée entre deux réservoirs de fluide contenant des solutions de chlorure de potassium (KCl) à différentes concentrations avec un pH contrôlé.

La membrane de 7,5 mm x 7,5 mm, avec son tube de nitrure de bore qui la traverse, a ensuite été comprimée entre deux réservoirs qui se composent de chambres en PEEK de 2 cm$^3$. La compression est assurée par une troisième pièce qui pousse la chambre supérieure, à l'aide d'une vis, vers la chambre inférieure, en garantissant un contact parallèle pendant l'étanchéisation. L'étanchéisation a été effectuée via deux joints toriques, directement sur la membrane. Avant chaque insertion du dispositif expérimental, un nettoyage approfondi des chambres et des joints toriques est effectué avec du savon (MicroSon, *Fiszcher Scientific*), et 15 minutes d'ultrasons à 60 °C, puis en rinçant le tout à l'eau déminéralisée (*Millipore*). Une pince en Teflon a été utilisée afin d'éviter toute rayure et tout risque de fuite sur la chambre.

Des électrodes Ag/AgCl ont été utilisées pour mesurer le courant électrique qui passe dans le tube de nitrure de bore qui traverse la membrane, avec une résolution de l'ordre de plusieurs pico-ampères. Des mesures de référence de la conductance électrique ont été effectuées afin de valider chaque étape du protocole de fabrication. L'intégrité du nanotube qui traverse la membrane a, en outre, été vérifiée après utilisation à l'aide d'un MET.

Bien que la finalité du dispositif concerne le transport osmotique dans le BNNT individuel avec un gradient de salinité, les premières études ont porté sur la caractérisation de sa réponse aux différences de tension et de pression, qui fournissent des informations essentielles sur les propriétés de surface du BNNT. Par conséquent, le courant ionique $I$ généré dans le t-BNNT, dans le cas d'une différence de potentiel électrique $\Delta V$ a tout d'abord été mesuré en fonction de la concentration saline (**Figure 5**). La conductance électrique $G = I/\Delta V$ et la conductivité correspondante $K$ définie comme $G = K \times \dfrac{\pi R^2}{L}$ ont été calculées en fonction de la concentration saline (**Figure 5**). Pour un tube donné, une telle courbe présente une saturation de la conductance à faible concentration saline. Cette observation est caractéristique d'une surface chargée confinée (D.Stein, M.Kruithof, C.Dekker, Surface Charge governed ion transport in nanofluidic channels, Phys. Rev. Lett. 93, 035901 (2004)), qui présente un fort contraste avec le comportement signalé pour les nanotubes en carbone (H.Liu, et al. Translocation of single stranded DNA through single-walled carbon nanotubes Science 327 64-67 (2010)). La conductance prédite est (L.Bocquet, E.Charlaix, Nanofluidics, from bulk to interfaces, Chem. Soc. Rev., 39, 1073-1095 (2010)) :

$$G = 2e^2 \mu C_s \frac{\pi R^2}{L} + e\mu \frac{2\pi R}{L} \times |\Sigma|(1 + \alpha)$$

où $C_s$ correspond à la concentration en KCl, e correspond à la charge électronique,

$$\mu = \frac{1}{2}(\mu_{K^+} + \mu_{Cl^-}) = 4.8 \cdot 10^{11} s \cdot kg^{-1}$$

correspond à la mobilité du KCl, et $\Sigma$ correspond à la densité de charge de surface à la surface du nitrure de bore (en C/m$^2$) ; la correction $\alpha = (2\pi\ell_B\mu\eta)^{-1} \sim 1$ explique la contribution électro-osmotique à la conductance ($\ell_B = 0,7$ nm = longueur de Bjerrum, et $\eta$ = viscosité de l'eau).

Il apparaît qu'avec un pH faible (pH = 5 sur la **Figure 5A-B**), la charge de surface extraite augmente légèrement lorsque le diamètre du tube diminue, avec une valeur typique de $\Sigma \approx 0,1$ C/m$^2$ (**Figure 5B**). Bien que cette charge de surface soit déjà élevée, il a été constaté une augmentation importante - et réversible - avec le pH de cette charge, avec une valeur de $\Sigma$ qui augmente jusqu'à 1C/m$^2$ pour un pH de 11 environ (**Figure 5C**), ce qui correspond à 9e/nm$^2$ à la surface du nitrure de bore. Cela dépasse les densités de charge de surface classiques d'au moins un ordre de grandeur (R.J. Hunter Foundations of Colloid Science (Oxford Univ. Press, New York, 1991) et reproduirait par conséquent, la dépendance au pH de la charge (**Figure 5C**), en fournissant une valeur de pK$_\alpha \approx 5,5$ pour la constante d'équilibre (avec une densité de sites chargeables identifiée comme la densité de surface du bore dans le BNNT, soit $\Gamma = 18$ nm$^{-2}$).

La réponse du fluide confiné, en réaction à une chute de pression au sein du t-BNNT offre une autre mesure sensible qui permet d'évaluer la dynamique fluide/ions.

Pour cela, sur l'un des deux réservoirs, une liaison est établie entre le réservoir fermé et un tuyau relié par air à un régulateur de pression commandé en tension (*SMC Corp.*). La pression accessible sans fuite (contrôlée par un manomètre) varie entre zéro et deux bars, avec une précision de 50 mbar. Le régulateur de pression est relié à un compresseur via des filtres *SMS Corp.* afin de garantir la bonne qualité de l'air. Les expériences sont effectuées comme suit : la tension est réglée par le biais d'une différence de pression nulle jusqu'à stabilisation du courant. Ensuite, des variations de pression sont effectuées via le régulateur, et la différence de courant est consignée.

En transportant les ions dans la double couche électrique, un courant électrique continu de quelques pico-ampères est généré par le flux entraîné par la pression (**Figure 6**). Cela offre une mesure de la mobilité électro-osmotique et du potentiel zêta correspondant, $\zeta$ défini ici par la relation de Smoluchowski

$$I_{stream} = -\frac{\epsilon\zeta}{\eta}A\frac{\Delta P}{L}$$

($\varepsilon$ = permittivité diélectrique de l'eau, $A = \pi R^2$) (R.J. Hunter Foundations of Colloid Science (Oxford Univ. Press, New York, 1991). Une chute de pression jusqu'à 1,5 bar a donc été appliquée entre les deux réservoirs de fluide via une soupape commandée en tension, et le courant électrique résultant $I_{stream}(\Delta P)$ a été mesuré (**Figure 6A**). Il a été observé, comme la charge de surface $\Sigma$, que le potentiel zêta correspondant augmente avec le pH (voir **Figure 6B**), et est quasiment proportionnel à la charge de surface $\Sigma$, mesuré de manière indépendante. Il diminue également lentement avec la concentration saline, qui varie de manière linéaire avec $pC_{salt}$ = - $\log_{10}C_{salt}$ (**Figure 6C**). Globalement, la valeur du potentiel zêta obtenu est bien inférieur au potentiel de surface estimé, comme par exemple, celui calculé à partir de l'équation non linéaire de Poisson-Boltzmann. Ces premières mesures mettent en exergue la présence d'une énorme charge de surface $\Sigma$ sensible au pH et portée par les parois intérieures des BNNT. Il semblerait qu'aucune valeur de $\Sigma$ de 1 C.m$^{-2}$ n'ait été signalée à ce jour dans la littérature.

Il a ensuite été démontré que cette propriété exceptionnelle a un impact important sur le transport osmotique dans le nanotube, générant un courant électrique par une différence de concentration saline. Cette propriété peut avantageusement être exploitée dans la conversion d'énergie à partir du mélange d'eaux ayant des salinités différentes.

Pour cela, différentes concentrations de KCl de l'ordre de 10$^{-3}$ à 1M dans les deux réservoirs ont été utilisées, le courant électrique résultant a été mesuré pour un grand nombre de rapports de concentration, $C_{s,I}/C_{s,II}$.

Toutes les mesures ont été effectuées à un pH de 10. La conductance $G_{ion}$ a été mesurée par des variations de tension de l'ordre de -0,1 V à 0,1 V, et le courant souhaité a été obtenu par l'intersection de la courbe pour $\Delta V$ = 0. L'ordre de grandeur de ce courant était de quelques nano-ampères.

Afin d'extraire la contribution osmotique au courant en question, il a fallu, cependant, soustraire la contribution due au potentiel de Nernst du couple redox sur les électrodes (D-K Kim, C. Duan, Y-F. Chen, A. Majumdar Power generation from concentration gradient by reverse electrodialysis in ion-selective nanochannels Microfluid Nanofluid 9, 1215-1224 (2010)). En fait, une concentration en chlorure inégale au niveau des deux électrodes génère un potentiel de redox donné par l'expression: $\Delta E_{redox} = k_B T/e \times \log(\gamma_I C_I/\gamma_{II} C_{II})$ avec gamma qui correspond aux coefficients d'activité moyens des ions. Pour obtenir la contribution osmotique, le courant associé au potentiel de redox est soustrait à l'aide de la conductance : $I_{DO} = I_{mes} = G_{mes}E_{redox}$.

Le courant obtenu a donc été corrigé de la contribution qui résulte du potentiel de Nernst dû à la différence de concentration saline au niveau des deux électrodes (D-K Kim, C. Duan, Y-F. Chen, A. Majumdar Power generation from concentration gradient by reverse electrodialysis in ion-selective nanochannels Microfluid Nanoffluid 9, 1215-1224 (2010)). Comme cela est illustré sur la **Figure 7A**, un courant osmotique très élevé a été mesuré, de l'ordre de plusieurs nano-ampères, en comparaison avec le courant continu de plusieurs pico-ampères généré par une différence de pressions (**Figure 6**). Il a été observé que celui-ci augmente également en fonction du taux de salinité,

$$I_{osm} = K_{osm} \times \log[C_{max}/C_{min}]$$

avec le coefficient de transport $K_{osm} \approx 0.07$ - $0.16nA$ pour le nanotube sur la **Figure 7**, pour un pH de 5,5 à 11, et quasiment proportionnel à la charge de surface $\Sigma$ (**Figure 7A** - début). Etant donné que, dans la configuration illustrée sur la **Figure 7A**, le nanotube n'est pas sélectif vis-à-vis des ions (étant donné qu'aucun chevauchement de couches de Debye ne se produit ici), l'origine du courant produit diffère des mécanismes classiques sélectifs aux ions qui sont pris en compte pour la génération osmotique d'énergie (appelée électrodialyse inverse), et qui utilisent des membranes d'échange pour convertir le gradient de salinité en une énergie électrique (B. E. Logan and M. Elimelech, Membrane-based processes for sustainable power generation using water, Nature, 488, 313-319 (2012) et D-K Kim, C. Duan, Y-F, Chen, A. Majumdar Power generation from concentration gradient by reverse electrodialysis in ion-selective nanochannels Microfluid Nanofluid 9, 1215-1224 (2010)). On peut supposer que dans le cas présent, le courant osmotique généré résulte plutôt du flux osmotique induit par la différence de concentration saline au niveau de l'interface intérieure du tube. Bien qu'aucune chute de pression osmotique globale n'ait lieu dans cette configuration perméable, la différence de concentration saline crée un gradient de pression osmotique dans la couche diffuse au niveau des interfaces (**Figure 7C**).

Le nitrure de bore pourrait se comporter comme un matériau confinant, dont l'énorme charge de surface génère beaucoup plus de courant osmotique que les autres matériaux. De plus, le courant osmotique mesuré est bien supérieur aux courants continus entraînés par la pression illustrés sur la **Figure 6A**. Cela est dû à la contribution concertée de différents facteurs. Tout d'abord, en raison de l'origine microscopique différente des deux phénomènes, la mobilité osmotique est bien plus sensible aux charges de surface élevées que sa contrepartie électro-osmotique. Ensuite, cette différence quantitative provient également de la chute de pression osmotique bien plus importante qui existe à l'intérieur de la double couche pour le phénomène osmotique (généralement, $\Delta P_{osm} \sim 50bar$ pour $\Delta C_{salt}$ - $1M$, en comparaison avec la plage de pressions applicable avec les flux entraînés par la pression, $\Delta P_{,d}$, de quelques bar tout au plus).

Le t-BNNT convertit ainsi l'énergie électrique à partir d'un gradient de salinité. La puissance maximale correspondante générée par le gradient de salinité est de

$$P_{max} = I_{osm}^2/4G_{ion} = K_{osm}^2/4G_{ion} \times (\Delta \log[C_s])^2$$

qui entraîne une densité de puissance par unité de surface du tube $P_{max} = P_{max}/\pi R^2$ pouvant atteindre 4000 W.m$^{-2}$ pour le seul nanotube de nitrure de bore (**Figure 7B**). De la même manière, ce résultat obtenu pour un seul nanotube peut être extrapolé à une membrane en nitrure de bore macroscopique (M. Bechelany, et al. Synthesis of Boron Nitride Nanotubes by a Template-Assisted Polymer Thermolysis Process J. Phys. Chem. C, 111, 13378-13384 (2007)), avec une densité de BNNT similaire égale à environ $10^{10}$ cm$^{-2}$, pour laquelle la densité de puissance prédite atteint des valeurs en kW/m$^2$ similaires. Ces valeurs dépassent de plusieurs ordres de grandeur les densités de puissance reportées, généralement de quelques dizaines de W/m$^2$, à l'aide d'une électrodialyse inversée classique avec d'autres membranes d'échange (B. E, Logan and M. Elimelech, Membrane-based processes for sustainable power generation using water, Nature, 488, 313-319 (2012)). Les résultats obtenus démontrent ainsi les performances impressionnantes des membranes en BNNT pour la conversion d'énergie à partir du mélange d'eau avec différentes salinités, potentiellement supérieures au photovoltaïque.

**Revendications**

1. Dispositif pour la production d'énergie électrique comprenant deux cellules ($2_1$, $2_2$, **210**, **250**) destinées à contenir deux solutions ($3_1$, $3_2$, **110**, **150**) de concentration différente en au moins un soluté et séparées par au moins une membrane de séparation (**1, 310, 320, 330, 340**) dans laquelle sont aménagés des canaux (**10, 100**), chacune des cellules ($2_1$, $2_2$, **210, 250**) étant équipée d'une électrode ($4_1$, $4_2$, **400, 500**) destinée à être en contact avec la solution ($3_1$, $3_2$, **110, 150**) que contiendra ladite cellule ($2_1$, $2_2$, **210, 250**),
   **caractérisé en ce que** les parois des canaux (**10, 100**) sont constituées d'un matériau choisi parmi le nitrure de bore, le carbone dopé avec du bore, le nitrure de bore dopé avec du carbone, ou tout autre mélange des éléments bore, carbone et azote.

2. Dispositif selon la revendication 1 **caractérisé en ce que** les parois des canaux (**10, 100**) sont constituées d'un matériau cristallin, de structure hexagonale, et, de préférence, de nitrure de bore hexagonal.

3. Dispositif selon l'une des revendications précédentes **caractérisé en ce que** le diamètre des canaux (**10, 100**) appartient à la gamme allant de 1 à 1000 nm, de préférence à la gamme allant de 10 à 100 nm.

4. Dispositif selon l'une des revendications précédentes **caractérisé en ce que** les canaux (**10, 100**) sont délimités par des tubes (**100**) du matériau sélectionné.

5. Procédé de production d'énergie électrique utilisant un dispositif selon l'une des revendications précédentes, dans lequel une première solution ($3_1$, **110**) est placée dans l'une des cellules ($2_1$, **210**) de manière à ce que l'électrode ($4_1$, **400**) dont elle est équipée soit en contact avec cette première solution ($3_1$, **110**), et une deuxième solution ($3_2$, **150**) présentant une concentration en au moins un soluté différente de celle de la première solution ($3_1$, **110**) est placée dans l'autre cellule ($2_2$, **250**) de manière à ce que l'électrode ($4_2$, **500**) dont elle est équipée soit en contact avec cette deuxième solution ($3_2$, **150**) et dans lequel l'énergie électrique produite entre les deux électrodes ($4_1$, $4_2$, **400, 500**) est récupérée.

6. Procédé selon la revendication 5 **caractérisé en ce que** le soluté est un sel.

7. Procédé selon la revendication 5 ou 6 **caractérisé en ce que** les solutions ($3_1$, $3_2$, **110, 150**) sont des solutions aqueuses.

8. Procédé selon l'une des revendications 5 à 7 **caractérisé en ce que** les solutions ($3_1$, $3_2$, **110, 150**) sont de l'eau de mer ou de l'eau de rivière.

9. Procédé selon l'une des revendications 5 à 8 **caractérisé en ce que** le pH d'au moins l'une des deux solutions ($3_1$, $3_2$, **110, 150**), voire des deux solutions ($3_1$, $3_2$, **110, 150**), est supérieur ou égal à 6, de préférence supérieur ou égal à 7, préférentiellement supérieur ou égal à 8, et encore préférentiellement supérieur ou égal à 10.

10. Procédé selon l'une des revendications 5 à 8 **caractérisé en ce qu'**une étape de préparation du dispositif est réalisée avec deux solutions ($3_1$, $3_2$, **110, 150**) de concentration différente en au moins un soluté, l'une au moins des deux solutions ($3_1$, $3_2$, **110, 150**), voire les deux solutions ($3_1$, $3_2$, **110, 150**), présentant un pH supérieur ou égal à 6, de préférence supérieur ou égal à 7, préférentiellement supérieur ou égal à 8, et encore préférentiellement supérieur ou égal à 10.

11. Procédé selon l'une des revendications 5 à 10 **caractérisé en ce qu'**une production en continu d'énergie électrique est assurée par renouvellement de l'une au moins des deux solutions ($3_1$, $3_2$, **110, 150**), voire des deux solutions ($3_1$, $3_2$, **110, 150**).

**Patentansprüche**

1. Vorrichtung zur Erzeugung elektrischer Energie, umfassend zwei Zellen ($2_1$, $2_2$, 210, 250), die dazu bestimmt sind, zwei Lösungen ($3_1$, $3_2$, 110, 150) mit einer unterschiedlichen Konzentration an zumindest einem gelösten Stoff zu enthalten, und die durch zumindest eine Trennmembran (1, 310, 320, 330, 340), in welcher Kanäle (10, 100) eingebracht sind, getrennt sind, wobei jede der Zellen ($2_1$, $2_2$, 210, 250) mit einer Elektrode ($4_1$, $4_2$, 400, 500) ausgestattet ist, die dazu bestimmt ist, mit der Lösung ($3_1$, $3_2$, 110, 150) in Kontakt zu stehen, die in der Zelle ($2_1$, $2_2$, 210, 250) enthalten ist,
dadurch gekennzeichnet, dass die Wände der Kanäle (10, 100) aus einem Material bestehen, das ausgewählt ist aus Bornitrid, mit Bor dotiertem Kohlenstoff, mit Kohlenstoff dotiertem Bornitrid, oder einer beliebigen anderen Mischung der Elemente Bor, Kohlenstoff und Stickstoff.

2. Vorrichtung nach Anspruch 1, **dadurch gekennzeichnet, dass** die Wände der Kanäle (10, 100) aus einem Kristallmaterial mit sechseckiger Struktur bestehen, und vorzugsweise aus sechseckigem Bornitrid.

3. Vorrichtung nach einem der vorhergehenden Ansprüche, **dadurch gekennzeichnet, dass** der Durchmesser der Kanäle (10, 100) in den Bereich von 1 bis 1000 nm, vorzugsweise in den Bereich von 10 bis 100 nm fällt.

4. Vorrichtung nach einem der vorhergehenden Ansprüche, **dadurch gekennzeichnet, dass** die Kanäle (10, 100) durch Rohre (100) aus dem ausgewählten Material begrenzt werden.

5. Verfahren zur Erzeugung elektrischer Energie unter Verwendung einer Vorrichtung nach einem der vorhergehenden Ansprüche, wobei eine erste Lösung ($3_1$, 110) auf solche Weise in einer der Zellen ($2_1$, 210) platziert wird, dass die Elektrode ($4_1$, 400), mit welcher sie ausgestattet ist, in Kontakt mit dieser ersten Lösung ($3_1$, 110) steht, und eine zweite Lösung ($3_2$, 150), die eine Konzentration an zumindest einem gelösten Stoff aufweist, die sich von jener der ersten Lösung ($3_1$, 110) unterscheidet, in der anderen Zelle ($2_2$, 250) auf solche Weise platziert wird, dass die Elektrode ($4_2$, 500), mit welcher sie ausgestattet ist, mit dieser zweiten Lösung ($3_2$, 150) in Kontakt steht, und wobei die zwischen den zwei Elektroden ($4_1$, $4_2$, 400, 500) erzeugte elektrische Energie gewonnen wird.

6. Verfahren nach Anspruch 5, **dadurch gekennzeichnet, dass** der gelöste Stoff ein Salz ist.

7. Verfahren nach Anspruch 5 oder 6, **dadurch gekennzeichnet, dass** die Lösungen ($3_1$, $3_2$, 110, 150) wässrige Lösungen sind.

8. Verfahren nach einem der Ansprüche 5 bis 7, **dadurch gekennzeichnet, dass** die Lösungen ($3_1$, $3_2$, 110, 150) Salzwasser oder Süßwasser sind.

9. Verfahren nach einem der Ansprüche 5 bis 8, **dadurch gekennzeichnet, dass** der pH zumindest einer der zwei Lösungen ($3_1$, $3_2$, 110, 150) bzw. der zwei Lösungen ($3_1$, $3_2$, 110, 150) höher oder gleich 6, vorzugsweise höher oder gleich 7, vorzugsweise höher oder gleich 8, und noch bevorzugter höher oder gleich 10 ist.

10. Verfahren nach einem der Ansprüche 5 bis 8, **dadurch gekennzeichnet, dass** ein Schritt zur Vorbereitung der Vorrichtung mit zwei Lösungen ($3_1$, $3_2$, 110, 150) mit einer unterschiedlichen Konzentration an zumindest einem gelösten Stoff durchgeführt wird, wobei zumindest eine der zwei Lösungen ($3_1$, $3_2$, 110, 150) bzw. die zwei Lösungen ($3_1$, $3_2$, 110, 150) einen pH höher oder gleich 6, vorzugsweise höher oder gleich 7, vorzugsweise höher oder gleich 8, und noch bevorzugter höher oder gleich 10 aufweist/aufweisen.

11. Verfahren nach einem der Ansprüche 5 bis 10, **dadurch gekennzeichnet, dass** eine kontinuierliche Erzeugung elektrischer Energie durch Regeneration zumindest einer der zwei Lösungen ($3_1$, $3_2$, 110, 150) bzw. der zwei Lösungen ($3_1$, $3_2$, 110, 150) sichergestellt wird.

**Claims**

1. A device for producing electric energy comprising two cells ($2_1$, $2_2$, 210, 250) intended to contain two solutions ($3_1$, $3_2$, 110, 150) of different concentration of at least one solute and separated by at least one separation membrane (1, 310, 320, 330, 340) in which are made channels (10, 100), each of the cells ($2_1$, $2_2$, 210, 250) being equipped with an electrode ($4_1$, $4_2$, 400, 500) intended to be in contact with the solution ($3_1$, $3_2$, 110, 150) which said cell ($2_1$, $2_2$, 210, 250) will contain, **characterized in that** the walls of the channels (10, 100) consist of a material selected from boron nitride, carbon doped with boron, boron nitride doped with carbon, or any other mixture of the boron, carbon and nitrogen elements.

2. The device according to claim 1, **characterized in that** the walls of the channels (10, 100) consist of a crystalline material, of hexagonal structure and preferably of hexagonal boron nitride.

3. The device according to one of the preceding claims, **characterized in that** the diameter of channels (10, 100) belongs to the range from 1 to 1,000 nm, preferably to the range from 10 to 100 nm.

4. The device according to one of the preceding claims, **characterized in that** the channels (10, 100) are delimited by tubes (100) of the selected material.

5. A method for producing electric energy using a device according to one of the preceding claims, wherein a first solution ($3_1$, 100) is placed in one of the cells ($2_1$, 210) so that the electrode ($4_1$, 400) with which it is equipped is in contact with this first solution ($3_1$, 110), and a second solution ($3_2$, 150) having a concentration of at least one solute different from that of the first solution ($3_1$, 110) is placed in the other cell ($2_2$, 250) so that the electrode ($4_2$, 500) with which it is equipped is in contact with this second solution ($3_2$, 150) and wherein the produced electric energy between both electrodes ($4_1$, $4_2$, 400, 500) is recovered.

6. The method according to claim 5 **characterized in that** the solute is a salt.

7. The method according to claim 5 or 6, **characterized in that** the solutions ($3_1$, $3_2$, 110, 150) are aqueous solutions.

8. The method according to any of claims 5 to 7, **characterized in that** the solutions ($3_1$, $3_2$, 110, 150) are seawater or river water.

9. The method according to any of claims 5 to 8, **characterized in that** the pH of at least one of the two solutions ($3_1$, $3_2$, 110, 150), or even of both solutions ($3_1$, $3_2$, 110, 150) is greater than or equal to 6, preferably greater than or equal to 7, preferentially greater than or equal to 8, and still preferentially greater than or equal to 10.

10. The method according to any of claims 5 to 8, **characterized in that** a step for preparing the device is carried out with two solutions ($3_1$, $3_2$, 110, 150) of different concentration of at least one solute, at least one of the two solutions ($3_1$, $3_2$, 110, 150), or even of both solutions ($3_1$, $3_2$, 110, 150), having a pH greater than or equal to 6, preferably greater than or equal to 7, preferentially greater than or equal to 8, and still preferentially greater than or equal to 10.

11. The method according to any of claims 5 to 10, **characterized in that** a continuous production of electric energy is ensured by renewing at least one of the two solutions ($3_1$, $3_2$, 110, 150), or even both solutions ($3_1$, $3_2$, 110, 150).

FIG.1

FIG.2

FIG.4

FIG.3

FIG.5

FIG.6

EP 2 909 477 B1

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1746680 A
- US 4283913 A
- WO 2008108633 A

**Littérature non-brevet citée dans la description**

- **J. C. FAIR et al.** *The Journal of Chemical Physics,* 1971, vol. 54 (8), 3307-3316
- **JAN W. POST et al.** *Environ Sci. Technol. 2008,* 2008, vol. 42, 5785-5790
- **BRUCE E. LOGAN et al.** *Nature,* 2012, vol. 488, 313-319
- **DONG-KWON KIM et al.** *Microfluid nanofluid,* 2010, vol. 9, 1215-1224
- **R. ARENAL ; X. BLASE ; A. LOISEAU.** *Advances in Physics,* 2010, vol. 59, 101-179
- *J. Phys. Chem. C.,* 2007, vol. 111, 13378-13384
- **HOLT et al.** *Science,* 2006, vol. 312, 1034
- **R.D. GRETZ et al.** *Surface Science,* 1967, vol. 6, 171
- **L. BARDOS et al.** *Journal Of Physics D - Applied Physics,* 1982, vol. 15, L79-L82
- **D.V. TSU ; G. LUCOVSKY.** *Journal Of Non-Crystalline Solids,* 1987, vol. 97-8, 839-842
- **S.C. SAHA et al.** *Thin Solid Films,* 1999, vol. 337, 248-252
- **M. PETITJEAN et al.** *Applied Physics A - Materials Science & Processing,* 1992, vol. 54, 95-99
- **B. MAYER.** *Thin Solid Films,* 1992, vol. 221, 166-182
- **K. GRUTER et al.** *Journal Of Crystal Growth,* 1989, vol. 94, 607-612
- **T. WIDEMAN et al.** *Inorganic Chemistry,* 1995, vol. 34, 1002
- **D.STEIN ; M.KRUITHOF ; C.DEKKER.** Surface Charge governed ion transport in nanofluidic channels. *Phys. Rev. Lett.,* 2004, vol. 93, 035901
- **H.LIU et al.** Translocation of single stranded DNA through single-walled carbon nanotubes. *Science,* 2010, vol. 327, 64-67
- **L.BOCQUET ; E.CHARLAIX.** Nanofluidics, from bulk to interfaces. *Chem. Soc. Rev.,* 2010, vol. 39, 1073-1095
- **R.J. HUNTER.** Foundations of Colloid Science. Oxford Univ. Press, 1991
- **D-K KIM ; C. DUAN ; Y-F. CHEN ; A. MAJUMDAR.** Power generation from concentration gradient by reverse electrodialysis in ion-selective nanochannels. *Microfluid Nanofluid,* 2010, vol. 9, 1215-1224
- **D-K KIM ; C. DUAN ; Y-F. CHEN ; A. MAJUMDAR.** Power generation from concentration gradient by reverse electrodialysis in ion-selective nanochannels. *Microfluid Nanoffuid,* 2010, vol. 9, 1215-1224
- **B. E. LOGAN ; M. ELIMELECH.** Membrane-based processes for sustainable power generation using water. *Nature,* 2012, vol. 488, 313-319
- **D-K KIM ; C. DUAN ; Y-F, CHEN ; A. MAJUMDAR.** Power generation from concentration gradient by reverse electrodialysis in ion-selective nanochannels. *Microfluid Nanofluid,* 2010, vol. 9, 1215-1224
- **M. BECHELANY et al.** Synthesis of Boron Nitride Nanotubes by a Template-Assisted Polymer Thermolysis Process. *J. Phys. Chem. C,* 2007, vol. 111, 13378-13384
- **B. E, LOGAN ; M. ELIMELECH.** Membrane-based processes for sustainable power generation using water. *Nature,* 2012, vol. 488, 313-319